# EUROPÄISCHE PATENTSCHRIFT

(11) **EP 0 617 908 B1**
(45) Veröffentlichungstag und Bekanntmachung des Hinweises auf die Patenterteilung: **01.07.1998**
(21) Anmeldenummer: 94104370.5
(22) Anmeldetag: 19.03.1994
(51) Int. Cl.: A47J 37/00

(54) **Tisch-Vorrichtung zum Aufbereiten von Speisen**
Countertop barbecue
Barbecue de table

(30) Priorität: 29.03.1993 CH 952/93
(43) Veröffentlichungstag der Anmeldung: 05.10.1994
(73) Patentinhaber: Grunder, Roger, CH-8143 Stallikon (CH)
(72) Erfinder: Grunder, Roger, CH-8143 Stallikon (CH)
(74) Vertreter: Petschner, Goetz

(56) Entgegenhaltungen:
- GB-A- Q2 475
- US-A- 4 150 610

## Beschreibung

Die vorliegende Erfindung betrifft eine Tisch-Vorrichtung zum Aufbereiten von Speisen, mit einem vorzugsweise rutschfest auf einer Platte aus Holz, Stein oder dgl. aufsetzbaren Brenner und einem über dem Brenner wegnehmbar angeordneten Grillgutträger.

Das Bedürfnis, am Tisch und individuell Speisen zu kochen, zu braten oder zu grillen besteht seit je, was die verschiedensten Vorrichtungen, wie Fondue-Rechauds und elektrische Raclette-Geräte beweisen.

Bisher nicht möglich ist es allerdings, über einer offenen Rechaud-Flamme Fleisch zu grillieren, da keine ausreichende Hitze über der Flamme erreicht werden kann, es sei denn, dass Grillgut ist direkt im Flammenbereich, wo es dann allerdings sofort verbrennt. Die durch das FR-Patent FR-A-2 355 488 (mit der Anmeldenummer 7618882) vorgeschlagene Lösung mit einer Spiessanordnung über einer offenen Flamme ist so nicht brauchbar.

Aufgabe der vorliegenden Erfindung ist deshalb die Schaffung einer Tisch-Vorrichtung der vorgenannten Art, insbesondere zum Grillieren von Speisen über einer offenen Flamme, mit einer ausreichenden Temperatur im Bereich des Grillgutträgers und ohne die Gefahr von Verrussen oder Verbrennen.

Dies wird erfindungsgemäss zunächst dadurch erreicht, dass der Brenner von einer, von der Platte wenigstens teilweise distanzierten, den Brenner überragenden, kaminartigen Haube mit seitlichem Abstand umgeben ist, deren Seitenwände sich bis nahe der Platte erstrecken und mit den Wandungen des Brenners Luftströmungskanäle begrenzen, welche bodenseitig nahe der Platte mit der Umgebungsluft kommunizieren.

Durch diese Massnahmen baut sich mit dem Zünden der Brennerflamme eine von unten nach oben wirksame Luftströmung auf, die die Flamme über die ganze Brennerfläche verteilt und in hohem Grade mit Sauerstoff anreichert, was so zu einer stark erhöhten Grilltemperatur führt.

Diese Wirkung kann dann erhöht werden, wenn sich die kaminartige Haube nach oben verjüngt.

Bei einer bevorzugten Ausgestaltung des erfindungsgemässen Tisch-Grills ist es zudem zweckmässig, wenn der Brenner ein länglicher, nach oben offener Behälter zur Aufnahme einer Brennpaste oder dgl., oder ein länglich ausgebildeter Rechaud-Brenner für Brennspiritus oder dgl. ist.

Weiter kann eine bevorzugte Ausgestaltung des erfindungsgemässen Tisch-Grills darin bestehen, dass der Grillgutträger ein oberhalb der kaminartigen Haube abgestützter Grillrost oder Drehspiess ist.

Eine beispielsweise Ausführungsform des Erfindungsgegenstandes ist nachfolgend anhand der Zeichnung näher erläutert. Es zeigen:
- Fig. 1: in schaubildartiger Darstellung einen erfindungsgemässen Tisch-Grill und
- Fig. 2: in schematischer Seitenansicht den Tisch-Grill gemäss Fig. 1 zur Veranschaulichung der Brennwirkung unter der erzeugten Luftströmung.

Die dargestellte erfindungsgemässe Tisch-Vorrichtung zum Aufbereiten von Speisen umfasst einen vorzugsweise rutschfest auf einer Platte 1 aus Holz, Stein oder dgl. aufsetzbaren Brenner 2 und einen über dem Brenner wegnehmbar angeordneten Grillgutträger 3.

Erfindungsgemäss ist hierbei der Brenner 2 von einer, von der Platte 1 wenigstens teilweise distanzierten, den Brenner überragenden, kaminartigen Haube 4 mit seitlichem Abstand umgeben, deren Seitenwände mit den Wandungen des Brenners 2 Luftströmungskanäle 5 begrenzen, welche bodenseitig mit der Umgebungsluft kommunizieren.

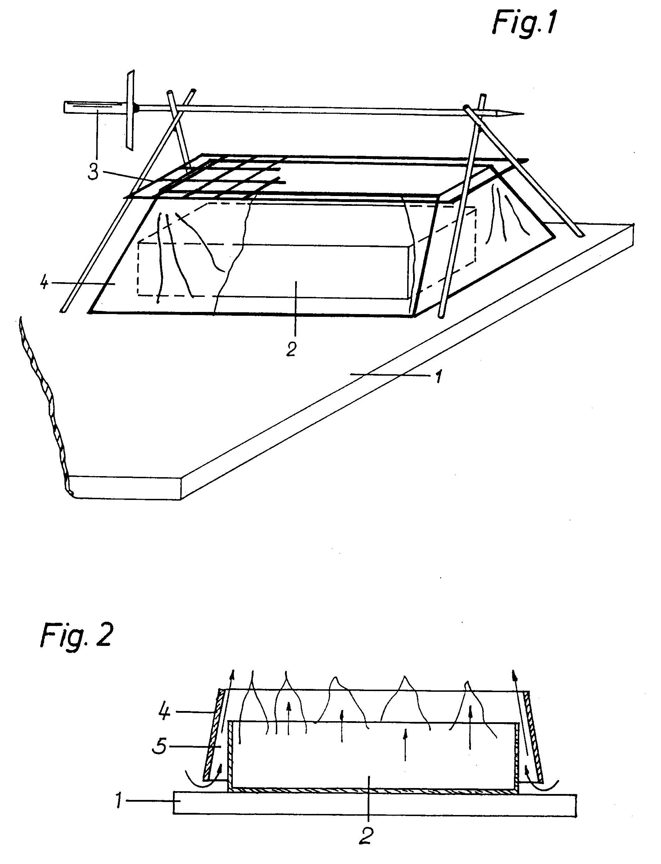

Durch diese Massnahmen baut sich mit dem Zünden der Brennerflamme eine von unten nach oben wirksame Luftströmung auf (Fig.2), die die Flamme über die ganze Brennerfläche verteilt und in hohem Grade mit Sauerstoff anreichert, was so zu einer stark erhöhten Grilltemperatur über der Flamme führt, ohne das Grillgut unmittelbar zu verbrennen resp. zu verrussen.

Diese Wirkung wird erhöht, indem die kaminartige Haube nach oben verjüngt ausgestaltet wird.

Bei einer bevorzugten Ausgestaltung des erfindungsgemässen Tisch-Grills kann der Brenner 2 ein länglicher, nach oben offener Behälter zur Aufnahme einer Brennpaste oder dgl., oder ein länglich ausgebildeter Rechaud-Brenner für Brennspiritus oder dgl. sein.

Weiter kann der Grillgutträger 3 ein oberhalb der kaminartigen Haube 4 abgestützter Grillrost oder Drehspiess sein.

Aus dem Vorbeschriebenen ergibt sich somit erstmals die Möglichkeit, mit einer Tisch-Vorrichtung über einer offenen Flamme Speisen einwandfrei aufzubereiten, insbesondere Fleisch auf einem Grillrost oder an einem Drehspiess zu gillieren.

## Patentansprüche

1. Tisch-Vorrichtung zum Aufbereiten von Speisen, mit einem vorzugsweise rutschfest auf einer Platte aus Holz, Stein oder dgl. aufsetzbaren Brenner und einem über dem Brenner wegnehmbar angeordneten Grillgutträger, wobei der Brenner von einer, von der Platte wenigstens teilweise distanzierten, den Brenner überragenden, kaminartigen Haube mit seitlichem Abstand umgeben ist, **dadurch gekennzeichnet**, dass sich die Seitenwände der Haube (4) bis nahe der Platte (1) erstrecken und mit den Wandungen des Brenners (2) Luftströmungskanäle (5) begrenzen, welche bodenseitig nahe der Platte (1) mit der Umgebungsluft kommunizieren.

2. Tisch-Vorrichtung nach Anspruch 1, dadurch gekennzeichnet, dass der Brenner (2) ein länglicher, nach oben offener Behälter zur Aufnahme einer Brennpaste oder dgl., oder ein länglich ausgebildeter Rechaud-Brenner für Brennspiritus oder dgl. ist.

3. Tisch-Vorrichtung nach Anspruch 1, dadurch gekennzeichnet, dass der Grillgutträger (3) ein oberhalb der kaminartigen Haube (4) abgestützter Grillrost oder Drehspiess ist.

## Claims

1. Table device for the preparation of foods with a burner placeable in preferably slip-proof manner on a plate of wood, stone or the like and a support, which is arranged above the burner to be movable away, for stock to be grilled, wherein the burner is surrounded at a lateral spacing by a chimney-like hood which is at least partially spaced from the plate and which projects over the burner, characterised thereby that the side walls of the hood (4) extend closely up to the plate (1) and together with the walls of the burner (2) bound air flow channels (5) which communicate at the base near the plate (1) with the ambient air.

2. Table device according to claim 1, characterised thereby that the burner (2) is an elongate, upwardly open container for reception of a combustible composite or the like or a spirit burner, which is formed to be elongate, for combustible spirit or the like.

3. Table device according to claim 1, characterised thereby that the grill stock support (3) is a grilling grid or rotary spit supported above the chimney-like hood (4).

## Revendications

1. Dispositif de table pour la préparation d'aliments, avec un brûleur placé de préférence sans glisser sur une plaque, pierre ou analogue et un support pour les aliments à griller disposé amoviblement sur le brûleur, le brûleur étant entouré à une certaine distance latérale par un capot en forme de cheminée espacé au moins partiellement de la plaque, faisant saillie sur le brûleur caractérisé en ce que les parois latérales du capot (4) s'étendent jusqu'au voisinage de la plaque (1) et délimitent avec les parois du brûleur (2) des canaux d'écoulement d'air (5) qui, côté fond, communiquent à proximité de la plaque (1) avec l'air ambiant.

2. Dispositif de table selon la revendication 1, caractérisé en ce que le brûleur (2) est un récipient oblong, ouvert vers le haut, pour recevoir une pâte de combustion ou analogue, ou un brûleur à réchaud d'une forme oblongue pour de l'alcool dénaturé ou analogue.

3. Dispositif de table selon la revendication 1, caractérisé en ce que le support (3) pour les aliments à griller est une grille ou une broche tournante supportée au-dessus du capot en forme de cheminée (4).
